# EUROPÄISCHE PATENTSCHRIFT

(11) **EP 0 510 045 B1**
(45) Veröffentlichungstag und Bekanntmachung des Hinweises auf die Patenterteilung: **02.08.1995**
(21) Anmeldenummer: 91902102.2
(22) Anmeldetag: 12.01.1991
(51) Int. Cl.: G01M 3/16

(54) **ABDICHTUNGSFOLIE MIT EINER ELEKTRISCHEN MESSEINRICHTUNG ZUR ERFASSUNG VON LECKS IN DER FOLIE**
SEALING FILM WITH AN ELECTRIC MEASURING INSTRUMENT FOR DETECTING LEAKS IN THE FILM
FEUILLE D'ETANCHEITE COMPORTANT UN DISPOSITIF ELECTRIQUE DE MESURE POUR DETECTER LES DEFAUTS D'ETANCHEITE DE LA FEUILLE

(30) Priorität: 21.01.1990 DE 4001521
(43) Veröffentlichungstag der Anmeldung: 28.10.1992
(73) Patentinhaber: VON WITZKE GMBH & CO., D-45309 Essen (DE)
(72) Erfinder: Rödel, Andreas, D-1000 Berlin 31 (DE)
(74) Vertreter: Cohausz & Florack Patentanwälte
(86) Internationale Anmeldenummer: EP9100038
(87) Internationale Veröffentlichungsnummer: WO9110889

(56) Entgegenhaltungen:
- EP-A- 0 278 503
- EP-A- 0 325 665
- DE-A- 3 011 500

## Beschreibung

Die Erfindung bezieht sich auf eine Abdichtungsfolie mit einer elektrischen Meßeinrichtung zur Erfassung von Lecks in der Folie, die über die gesamte Fläche der Folie verteilt angeordnete, elektrische Meßleitungen und ein mit diesen Meßleitungen verbindbares elektrisches Meßgerät aufweist.

Abdichtungsfolien bestehen aus Kunststoff oder Bitumen und sind in der Regel aus einzelnen Bahnen zusammengeschweißt. Sie können für verschiedene Zwecke eingesetzt werden, beispielsweise für die Abdichtung von Bauwerken, insbesondere Flachdächern, Wasserspeichern, Dammbauwerken oder Mülldeponien, insbesondere Sondermülldeponien. In allen Fällen hat man ein Interesse daran, Lecks in der Folie nicht nur frühzeitig zu erkennen, sondern auch zu lokalisieren, damit diese Lecks mit geringstmöglichem Aufwand abgedichtet werden können.

Bei einer bekannten Abdichtungsfolie der eingangs genannten Art (DE 30 11 500 C2), die für die Abdichtung von Flachdächern bestimmt ist, ist eine Dreiergruppe von Meßleitungen mäanderförmig auf der gesamten Fläche der Abdichtungsfolie angeordnet. Von den drei parallel zueinander angeordneten Meßleitungen sind zwei Meßleitungen elektrisch in Reihe geschaltet und bilden den Zweig einer Meßbrücke. Die dritte Meßleitung ist mit einem Ende an der Stromquelle für die Meßbrücke angeschlossen, während ihr anderes Ende keine elektrische Verbindung zu der Meßbrücke hat. Erst Feuchtigkeit zwischen den Meßleitungen führt zu einer elektrischen Verbindung der dritten Meßleitung mit einer der beiden anderen Meßleitungen, wodurch die Meßbrücke an die Spannungsquelle angeschlossen wird und ein Meßsignal liefert. Über die Größe dieses Meßsignals läßt sich die Länge des Meßleitungsabschnittes bis zur Feuchtigkeitsbrücke bestimmen und damit auch der Ort der Feuchtigkeitsbrücke unter der Voraussetzung lokalisieren, daß der genaue Verlauf der mäanderförmig verlegten Meßleitungen bekannt ist. Eine derartige Lokalisierung ist allerdings bei mäanderförmig verlegten Meßleitungen nicht einfach. Da Feuchtigkeitsbrücken zwischen den einseitig angeordneten Meßleitungen aber nicht nur infolge von Lecks in der Abdichtungsfolie, sondern auch aus anderen Gründen entstehen können, ist es bei der bekannten Abdichtungsfolie nicht möglich, mit der elektrischen Meßeinrichtung Lecks von anderen Fehlerquellen zu unterscheiden.

Ferner ist aus der europäischen Patentanmeldung EP-A-0 278 503 eine Vorrichtung zur Lecküberwachung und -ortung bekannt, bei der auf beiden Seiten einer Bodenbelagsschicht jeweils eine Schar streifenförmiger Leiterbahnen angeordnet sind. Die Leiterbahnen der einen Schar kreuzen die Leiterbahnen der anderen Schar. Sie sind praktisch lückenlos nebeneinander angeordnet und nur durch elektrische Isolierungen voneinander getrennt. Auch auf der jeweiligen Außenseite sind sie von einer isolierenden Schicht abgedeckt, so daß sie praktisch eingekapselt sind. Mittels einer Überwachungsschaltung können in einer vorgebbaren Zeitfolge paarweise jeweils Widerstandswerte zwischen jeder Leiterbahn auf der einen Seite und jeder Leiterbahn auf der anderen Seite des Bodenbelages gemessen und mit in der Überwachungsschaltung abgespeicherten Sollwerten verglichen werden, um bei Abweichung des verglichenen Wertes über vorgegebene Toleranzen hinaus ein Leck oder eine Veränderung des Zustandes des Bodenbelages anzuzeigen. Zusätzlich zur Widerstandsmessung kann auch noch eine Kapazitätsmessung vorgesehen sein.

Mit einer solchen Überwachungseinrichtung ist es möglich, praktisch lückenlos den Bodenbelag auf Lecks zu überwachen, da die beiden Scharen von Leiterbahnen die gesamte Oberfläche praktisch abdecken. Für eine solche Überwachung ist allerdings die vollflächige beidseitige Abdeckung der Bodenbelagsschicht mit Leiterbahnen notwendig, weil sich wegen der durch die Isolierungen eingekapselten Leiterbahnen nämlich Lecks nur in den einzelnen Kreuzungsbereichen der Leiterbahnen über die Widerstandsmessungen erfassen lassen. Der konstruktive und/oder meßtechnische Aufwand für diese lückenlose Lecküberwachung ist sehr groß. Zwar läßt sich die Anzahl der Kreuzungsbereiche und damit die Anzahl der Meßorte über die Breite der Leiterbahnen verringern, doch ist dies mit einer Verminderung der Genauigkeit der Lokalisierung verbunden. Will man Lecks dagegen genau lokalisieren, dann läßt sich dies bei dieser bekannten Lösung nur mit einer großen Zahl von schmalen, dicht nebeneinander angeordneten Leiterbahnen mit einer entsprechend großen Zahl von Meßarten/Kreuzungsstellen verwirklichen.

Der Erfindung liegt die Aufgabe zugrunde, eine Abdichtungsfolie der eingangs genannten Art zu schaffen, mit der Lecks in der Abdichtungsfolie eindeutig feststellbar und genau lokalisierbar sind.

Diese Aufgabe wird erfindungsgemäß dadurch gelöst, daß die Folie auf beiden Seiten jeweils eine Schar von nebeneinander und mit im Vergleich zur Breite der Meßleitungen großem gegenseitigen Abstand voneinander angeordneten, einzeln und/oder gruppenweise an das elektrische Meßgerät anschließbaren, zumindest bei auf sie einwirkender Feuchtigkeit elektrisch nicht isolierten Meßleitungen trägt, wobei die der einen Schar zugeordneten Meßleitungen die der anderen Schar zugeordneten Meßleitungen kreuzen und wobei die Meßeinrichtung bei einem festgestellten Leck in der Folie durch Ausmessen der elektrischen Widerstandswerte zwischen den Meßleitungen der einen Schar und den Meßleitungen der anderen Schar den Kreuzungspunkt des Meßleitungspaares mit dem kleinsten Widerstandswert als Ort für das Leck lokalisiert.

Bei der erfindungsgemäßen Abdichtungsfolie mit einer elektrischen Meßeinrichtung bilden die beidseitig angeordneten Meßleitungen ein Raster, dessen Kreuzungspunkte ansteuerbare Meßpunkte bilden. Bei intakter Abdichtungsfolie wirkt diese für die einzelnen Meßleitungspaare als großer elektrischer Widerstand, so daß das Meßgerät praktisch keinen Stromfluß zwischen den Meßleitungen der einen Schar und den Meßleitungen der anderen Schar feststellt. Im Falle eines Lecks sinkt der Isolationswiderstand der Abdichtungsfolie und die Meßeinrichtung stellt dann unter der Voraussetzung einer feuchten Umgebung der Abdichtungsfolie an dem Stromfluß fest, in der Nähe welcher Kreuzungspunkte der einzelnen Meßleitungspaare sich das Leck befindet. Über die Erfassung der Widerstandswerte für mehrere, insbesondere nicht auf einer Geraden liegenden Kreuzungspunkte ist die Lokaliserung eines Lecks möglich, das dann in dem von diesen Kreuzungspunkten mit den geringsten Widerstandswerten eingeschlossenen Bereich liegt. Durch einen Größenvergleich der Widerstandswerte läßt sich sogar mit einer über das Rastermaß der sich kreuzenden Leitungen liegenden Genauigkeit der Ort des Lecks in diesem Bereich bestimmen.

Die Lokalisierung ist besonders exakt, wenn dafür zwei möglichst nah bei dem Kreuzungspunkt gelegene Kreuzungspunkte ausgewählt werden, für die bei der Ermittlung der elektrischen Widerstandswerte an den Kreuzungspunkten der Folie der kleinste Widerstandswert für das Leck festgestellt wurde.

Nach einer Ausgestaltung der Erfindung ist vorgesehen, daß die Meßleitungen sich unter einem rechten Winkel kreuzen. Vorzugsweise sollten die Meßleitungen jeder Schar voneinander den gleichen Abstand haben und zueinander parallel verlaufen. Damit die Meßleitungen auf Dauer ihre Funktion erfüllen können, sollten sie mit einem gegen Korrosion schützenden, zumindest unter der Einwirkung von Feuchtigkeit elektrisch leitfähigem Material ummantelt sein.

Im folgenden wird die Erfindung anhand einer ein Ausführungsbeispiel darstellenden Zeichnung näher erläutert. Im einzelnen zeigen:
- Figur 1: eine Abdichtungsfolie mit einer elektrischen Meßeinrichtung in schematischer Darstellung **und**
- Figur 2: einen Ausschnitt der Abdichtungsfolie mit einem Leck zwischen mehreren als Meßpunkte ausgewählten Kreuzungspunkten von Meßleitungen der Meßeinrichtung.

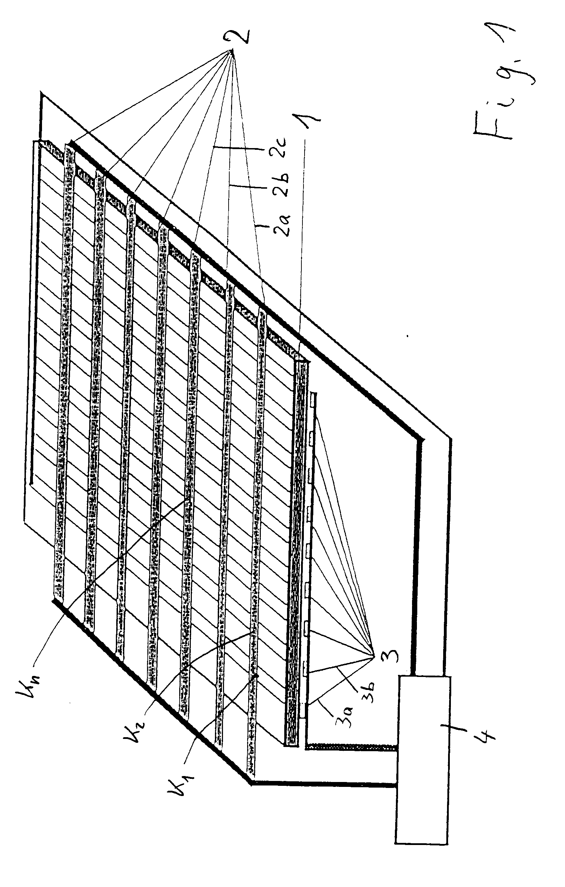

Die in Figur 1 dargestellte Abdichtungsfolie 1 aus Kunststoff oder Bitumenpappe trägt auf beiden Seiten jeweils eine Schar von parallelen, mit gleichem Abstand voneinander angeordneten Meßleitungen 2,3. Die Meßleitungen 2 auf der einen Seite sind zu den Meßleitungen 3 auf der anderen Seite unter einem rechten Winkel angeordnet, so daß sich ein aus Quadraten bestehendes Raster ergibt. Die Meßleitungen 2,3 sind ummantelt, und zwar mit einem Material, das sie gegen Korrosion schützt, aber elektrisch leitend ist, beispielsweise ein mit Kohlenstoff versetzter Kunststoff.

Die Meßleitungen 2,3 sind jeweils an mindestens einem Ende, im Ausführungsbeispiel an beiden Enden mit einem Meßgerät 4 verbunden, das im einfachsten Fall aus einer Spannungsquelle und einem Strommeßgerät sowie einer Schalteinrichtung besteht, mit der die einzelnen Meßleitungen 2,3 nacheinander an die Spannungsquelle angeschlossen werden können, so daß die als Meßpunkte dienenden Kreuzungspunkte K₁,K₂...Kₙ bezüglich ihres elektrischen Widerstandswertes ausgemessen werden können.

Da großflächige Abdichtungsfolien nicht einstückig hergestellt werden können, ist es üblich, sie aus Bahnen zusammenzusetzen. In einem solchen Fall verlaufen zweckmäßigerweise die Meßleitungen 2 in Bahnlängsrichtung, während die Meßleitungen 3 quer dazu verlaufen. Zumindest die in Bahnlängsrichtung verlaufenden Meßleitungen 2 können schon bei der Produktion der Abdichtungsbahn auf die Abdichtungsbahn aufgebracht werden. Sollen auch schon die quer zur Bahnlängsrichtung verlaufenden Meßleitungen 3 bei der Produktion aufgebracht werden, dann müssen mindestens an einem Längsrand einer jeden Bahn die Randbereiche ausgespart bleiben, um bei überlappt verschweißten Bahnen keine Kontaktbrücke von der einen Seite zur anderen Seite zu haben. Nach dem Verschweißen der Bahnen werden die Abschnitte der quer verlaufenden Meßleitungen elektrisch miteinander verbunden.

Die Erkennung eines Lecks und die Lokalisierung des erkannten Lecks erfolgt auf folgende Art und Weise:

Das Meßgerät 4 verknüpft nacheinander die einzelnen Meßleitungen 2,3 der einen Schar mit denen der anderen Schar. Beispielsweise werden an das Meßgerät 4 zunächst die Meßleitung 3a und dann nacheinander die Meßleitungen 2a,2b,2c... angeschlossen. Dann werden an das Meßgerät 4 die Leitung 3b und nacheinander die Meßleitungen 2a,2b,2c... angeschlossen usw.. Bei dieser Verknüpfung wird jeder Kreuzungspunkt K₁,K₂...Kₙ erfaßt und sein Widerstand festgestellt.

Sofern die Abdichtungsfolie 1 kein Leck aufweist, sind die Meßwerte dieser Meßreihe für alle Kreuzungspunkte K₁,K₂...Kₙ gleich. Hat die Abdichtungsfolie 1 jedoch ein Leck, so daß über das feuchte Material auf beiden Seiten der Abdichtungsfolie 1 und das Leck Strom zwischen den Meßleitungen 2 und 3 fließen kann, dann werden für die Kreuzungspunkte K₁,K₂...Kₙ... unterschiedliche Werte gemessen. Der Meßwert (elektrischer Widerstandswert) ist für den Kreuzungspunkt K_{K} am kleinsten, dem die Leckstelle L am nächsten liegt. Auf diese Art und Weise ist es also schon allein durch Erfassung der Meßwerte für die Kreuzungspunkte K₁,K₂....Kₙ... möglich, die Lage der Leckstelle einigermaßen genau zu lokalisieren.

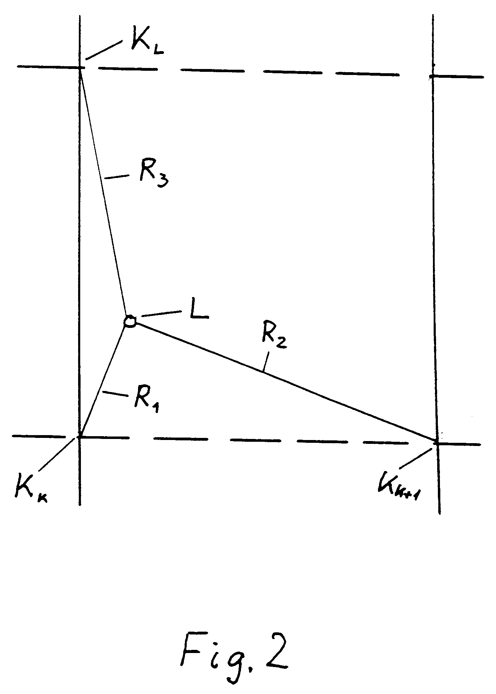

Mit der Meßeinrichtung ist aber auch eine noch genauere Lokalisierung der Leckstelle L möglich. Wie Figur 2 zeigt, wird an dem Kreuzungspunkt K_{K} für die Leckstelle L der kleinste Widerstandswert R₁ gemessen. Allein aufgrund dieser Messung ist die Leckstelle L aber noch nicht bestimmt. Der geometrische Ort für die Leckstelle L ist der Kreis um den Kreuzungspunkt K_{K} mit dem Radius R₁. Um die Leckstelle L eindeutig zu lokalisieren, ist es erforderlich, die Meßwerte von zwei weiteren Kreuzungspunkten K_{K+1} und K_{L} zu berücksichtigen, die nicht auf einer Geraden liegen dürfen. Der geometrische Ort für die Leckstelle L in bezug auf den Kreuzungspunkt K_{L} ist der Kreis um K_{L} mit dem Radius R₃, während der geometrische Ort für die Leckstelle L in Bezug auf den Kreuzungspunkt K_{K+1} der Kreis mit dem Radius R₂ um den Kreuzungspunkt K_{K+1} ist. Damit ergibt sich, daß die Leckstelle L der Schnittpunkt der Kreise mit dem Radius R₁ um K_{K}, mit dem Radius R₂ um K_{K+1} und mit dem Radius R₃ um K_{L} ist.

Diese Art der Auswertung der Meßwerte für die einzelnen Kreuzungspunkte K_{K},K_{K+1}...K_{L} ermöglicht also die exakte Lokalisierung der Leckstelle L, ohne daß es nötig ist, ein sehr enges Raster von Meßleitungen 2,3 vorzusehen. Sie stellt deshalb eine ideale Kombination mit der Lokalisierung der Leckstellen in erster Näherung über jeweils nur einen Meßwert dar.

Mit dem erfindungsgemäßen System lassen sich somit kontinuierlich mit geringem Aufwand Abdichtungsfolien - darunter werden nicht nur die beschriebenen Folien aus Kunststoff oder Bitumen, sondern jedes flächenhafte Gebilde verstanden, daß flüssigkeitsdicht und elektrisch isolierend ist - auf Lecks überwachen. Die Feststellung eines Lecks erfolgt sofort und sein Ort läßt sich ohne Schwierigkeiten sehr genau lokalisieren, so daß sich die erforderlichen Reparaturmaßnahmen an der Abdichtungsfolie schnell und gezielt durchführen lassen.

## Patentansprüche

1. Abdichtungsfolie mit einer elektrischen Meßeinrichtung zur Erfassung von Lecks (L) in der Folie (1), die über die gesamte Fläche der Folie (1) verteilt angeordnete elektrische Meßleitungen (2,3) und ein mit diesen Meßleitungen (2,3) verbindbares elektrisches Meßgerät (4) aufweist,
**dadurch gekennzeichnet**, daß die Folie (1) auf beiden Seiten jeweils eine Schar von nebeneinander und mit im Vergleich zur Breite der Meßleitungen großem gegenseitigen Abstand voneinander angeordneten, einzeln und/oder gruppenweise an das elektrische Meßgerät (4) anschließbaren, zumindest bei auf sie einwirkender Feuchtigkeit elektrisch nicht isolierten Meßleitungen (2,3) trägt, wobei die der einen Schar zugeordneten Meßleitungen (2) die der anderen Schar zugeordneten Meßleitungen (3) kreuzen und wobei die Meßeinrichtung so ausgelegt ist, daß sie bei einem durch Ausmessen der elektrischen Widerstandswerte (R₁,R₂,R₃) zwischen den Meßleitungen (2) der einen Schar und den Meßleitungen (3) der anderen Schar festgestellten Leck (L) in der Folie den Kreuzungspunkt des Meßleitungspaares (2,3) mit dem kleinsten Widerstandswert als Ort für das Leck (L) lokalisiert.

2. Abdichtungsfolie mit einer elektrischen Meßeinrichtung nach Anspruch 1,
**dadurch gekennzeichnet**, daß die Meßleitung (2,3) sich unter einem rechten Winkel kreuzen.

3. Abdichtungsfolie mit einer elektrischen Meßeinrichtung nach Anspruch 1 oder 2,
**dadurch gekennzeichnet**, daß die Meßleitungen (2,3) jeder Schar voneinander den gleichen Abstand haben.

4. Abdichtungsfolie mit einer elektrischen Meßeinrichtung nach einem der Ansprüche 1 bis 3,
**dadurch gekennzeichnet**, daß die Meßleitungen (2,3) jeder Schar zueinander parallel verlaufen.

5. Abdichtungsfolie mit einer elektrischen Meßeinrichtung nach einem der Ansprüche 1 bis 4,
**dadurch gekennzeichnet**, daß die Meßleitungen (2,3) mit einem gegen Korrosion schützenden, zumindest unter der Einwirkung von Feuchtigkeit elektrisch leitfähigen Material ummantelt sind.

6. Abdichtungsfolie mit einer elektrischen Meßeinrichtung nach einem der Ansprüche 1 bis 5,
**dadurch gekennzeichnet,** daß das Meßgerät (4) für die Lokalisierung des Lecks (L) zwei Kreuzungspunkte (K_{K+1},K_{L}) auswählt, die möglichst nah bei dem Kreuzungspunkt (K_{K}) des Meßleitungspaares liegen, für das bei der Ermittlung der elektrischen Widerstandswerte (R₁,R₂,R₃) der kleinste Widerstandswert (R₁) für das Leck (L) festgestellt wurde.

7. Verfahren zur Lokalisierung einer Leckstelle in einer Abdichtungsfolie mit einer elektrischen Meßeinrichtung nach einem der Ansprüche 1 bis 6,
wobei bei einem festgestellten Leck (L) in der Folie (1) dieses Leck (L) durch Ermittlung der elektrischen Widerstandswerte (R₁,R₂,R₃) zwischen den Meßleitungen (2) der einen Schar und den Meßleitungen (3) der anderen Schar an nicht auf einer einer Gerade liegenden Kreuzungspunkten (K_{K},K_{K+1}, K_{L}) lokalisiert wird.

## Claims

1. A sealing foil having an electric measuring device for the detection of leakages (L) in the foil (1), which has electric measuring lines (2, 3) disposed over its whole surface and an electric measuring apparatus (4) which can be connected to said measuring lines (2, 3), characterized in that the foil (1) bears on each of its sides a system of measuring lines (2, 3) which are disposed one beside the other spaced out from one another at a distance apart large in comparison with the width of the measuring line and which can be connected to the electric measuring apparatus (4) individually and/or in groups and are electrically uninsulated at least when affected by humidity, the measuring lines (2) associated with one system intersecting the measuring lines (3) associated with the other system, and the measuring device is so designed that when a leakage (L) is detected in the foil said measuring device by measuring the electric resistance values (R₁, R₂, R₃) between the measuring lines (2) of one system and the measuring lines (3) of the other system locates the point of intersection of the pair of measuring lines (2, 3) having the lowest resistance value as the location of the leakage (L).

2. A sealing foil having an electric measuring device according to claim 1, characterized in that the measuring lines (2, 3) intersect one another at right angles.

3. A sealing foil having an electric measuring device according to claims 1 or 2, characterized in that the measuring lines (2, 3) of each system are at the same distance from one another.

4. A sealing foil having an electric measuring device according to one of claims 1 to 3, characterized in that the measuring lines (2, 3) of each system extend parallel with one another.

5. A sealing foil having an electric measuring device according to one of claims 1 to 4, characterized in that the measuring lines (2, 3) are jacketed by an anti-corrosion material which is electrically conductive at least when affected by humidity.

6. A sealing foil having an electric measuring device according to one of claims 1 to 5, characterized in that to locate the leakage (L) the measuring apparatus (4) selects two points of intersection (K_{K+2}, K_{L}) which are situated as close as possible to the point of intersection (K_{K}) of that pair of measuring lines for which the determination of the electric resistance values (R₁, R₂, R₃) showed the lowest resistance value (R₁) for the leakage (L).

7. A method of locating a leakage in a sealing foil having an electric measuring device according to one of claims 1 to 6, whereby when a leakage (L) is detected in the foil (1) said leakage (L) is located by determining the electric resistance values (R₁, R₂, R₃) between the measuring lines (2) of one system and the measuring lines (3) of the other system at points of intersection (K_{K}, K_{K+1}, K_{L}) which do not lie on a straight line.

## Revendications

1. Feuille d'étanchéité munie d'un dispositif de mesure électrique de détection de fuites (L) dans la feuille (1), qui comporte des connexions de mesure électriques (2, 3) réparties sur toute la surface de la feuille (1) et un appareil de mesure électrique (4) pouvant être relié à ces connexions de mesure (2, 3), caractérisée en ce que la feuille (1) porte sur ses deux côtés respectifs un ensemble de connexions de mesure (2, 3) non isolées électriquement au moins vis-à-vis de l'humidité s'exerçant sur la feuille, disposées à un écartement mutuel élevé en comparaison avec la largeur des connexions de mesure, de manière individuelle et/ou en groupe et pouvant être raccordé à l'appareil de mesure électrique (4), et en ce que les connexions de mesure (2) associées à un ensemble croisent les connexions de mesure (3) associées à l'autre ensemble et le dispositif de mesure est réalisé de façon qu'il localise, par mesure de la valeur de la résistance électrique (R1, R2, R3) entre les connexions de mesure (2) d'un ensemble et les connexions de mesure (3) de l'autre ensemble la fuite constatée dans la feuille, le point de croisement de la paire de connexions de mesure (2, 3) ayant la plus petite valeur de résistance, comme endroit de la fuite (L).

2. Feuille d'étanchéité selon la revendication 1, caractérisée en ce que les connexions de mesure (2, 3) se croisent à angle droit.

3. Feuille d'étanchéité comportant un dispositif de mesure électrique selon la revendication 1 ou 2, caractérisée en ce que les connexions de mesure (2, 3) de chaque ensemble ont le même écartement l'une par rapport à l'autre.

4. Feuille d'étanchéité comportant un dispositif de mesure électrique selon l'une des revendications 1 à 3, caractérisée en ce que les connexions électriques (2, 3) de chaque ensemble sont parallèles l'une à l'autre.

5. Feuille d'étanchéité comportant un dispositif de mesure électrique selon l'une des revendications 1 à 4, caractérisée en ce que les connexions de mesure (2, 3) sont enveloppées dans un matériau conducteur électrique, protecteur contre la corrosion, au moins par action d'humidité.

6. Feuille d'étanchéité comportant un dispositif de mesure électrique selon l'une des revendications 1 à 5, caractérisée en ce que l'appareil de mesure (4) pour la localisation de la fuite (L) sélectionne pour la localisation de la fuite (L), deux points de croisement (Kₖ₊₁, K_{L}) qui se trouvent le plus près possible du point de croisement (Kₖ) de la paire de connexions de mesure, pour laquelle lors de la détermination des valeurs des résistances électriques (R1, R2, R3), la plus petite valeur de résistance (R1) est déterminée pour la fuite (L).

7. Procédé pour localiser une fuite dans une feuille d'étanchéité munie d'un dispositif de mesure électrique conforme à l'une des revendications 1 à 6, selon lequel après constatation d'une fuite (L) dans la feuille (1), cette fuite (L) est localisée par la détermination de la valeur de la résistance électrique (R₁, R₂, R₃) entre les connexions de mesure (2) d'un ensemble et les connexions de mesure (3) de l'autre ensemble en des points de croisement (K_{K}, K_{K+1}, K_{L}) ne se trouvant pas sur une droite.
